# EUROPÄISCHE PATENTSCHRIFT

(11) **EP 3 809 054 B1**
(45) Veröffentlichungstag und Bekanntmachung des Hinweises auf die Patenterteilung: **06.12.2023**
(21) Anmeldenummer: 19204169.7
(22) Anmeldetag: 18.10.2019
(51) Int. Cl.: F24F 7/06, F24F 11/00, F24F 11/77, F24F 110/30, F24F 110/40

(54) **RAUMLUFT- UND/ODER KLIMATECHNISCHE ANLAGE ZUR BELÜFTUNG EINES RAUMES ODER VON RÄUMEN MIT ZUMINDEST EINER HAUPTLUFTLEITUNG UND VERFAHREN ZUR REGELUNG EINER RAUMLUFT- UND/ODER KLIMATECHNISCHE ANLAGE ZUR BELÜFTUNG EINES RAUMES ODER VON RÄUMEN MIT ZUMINDEST EINER HAUPTLUFTLEITUNG**
ROOM AIR AND / OR AIR CONDITIONING SYSTEM FOR VENTILATING A ROOM OR ROOMS WITH AT LEAST ONE MAIN AIR LINE AND METHOD FOR REGULATING A ROOM AIR AND / OR AIR CONDITIONING SYSTEM FOR VENTILATING A ROOM OR ROOMS WITH AT LEAST ONE MAIN AIR LINE
INSTALLATION TECHNIQUE D'AIR AMBIANT ET / OU DE CLIMATISATION DESTINÉE À L'AÉRATION D'UNE PIÈCE OU DES PIÈCES DOTÉE D'AU MOINS UNE CONDUITE D'AIR PRINCIPALE ET PROCÉDÉ DE RÉGLAGE D'UNE INSTALLATION TECHNIQUE D'AIR AMBIANT ET / OU DE CLIMATISATION DESTINÉE À L'AÉRATION D'UNE PIÈCE OU DES PIÈCES DOTÉE D'AU MOINS UNE CONDUITE D'AIR PRINCIPALE

(43) Veröffentlichungstag der Anmeldung: 21.04.2021
(73) Patentinhaber: TROX GmbH, 47506 Neukirchen-Vluyn (DE)
(72) Erfinder: Lange, Stefan, 47506 Neukirchen-Vluyn (DE); Hoh, Alexander, Dr., 13127 Berlin (DE); Wolters, Thomas, 41812 Erkelenz (DE)
(74) Vertreter: Dr. Stark & Partner Patentanwälte mbB

(56) Entgegenhaltungen:
- GB-A- 2 257 547
- US-A1- 2004 194 484
- US-A1- 2013 180 700
- US-A1- 2015 354 845

## Beschreibung

Die Erfindung betrifft eine raumluft- und/oder klimatechnische Anlage zur Belüftung eines Raumes oder von Räumen mit zumindest einer Hauptluftleitung, wobei von der Hauptluftleitung zumindest eine Teilluftleitung im Bereich einer Abzweigung abzweigt und/oder sich die Hauptluftleitung im Bereich einer Abzweigung in wenigstens zwei Teilluftleitungen aufteilt, wobei die Hauptluftleitung einen Lufteinlass zum Eintritt eines strömenden Mediums aufweist und wobei in der Hauptluftleitung zwischen dem Lufteinlass und der dem Lufteinlass entlang der Strömung am nächsten angeordneten Abzweigung ein Hauptluftleitungsventilator angeordnet ist, wobei jede Teilluftleitung zumindest einen Luftauslass aufweist und wobei jedem in der Teilluftleitung vorgesehenen Luftauslass in Strömungsrichtung gesehen ein regelbarer Volumenstromregler zur Regelung des Volumenstroms des über den betreffenden Luftauslass strömenden Mediums vorgelagert ist, wobei der entsprechende Volumenstromregler jeweils einen Stellantrieb und eine Regeleinrichtung aufweist und ihm ein Sensor, vorzugsweise ein Differenzdrucksensor, zum Messen der Geschwindigkeit und/oder zum Messen des Wirkdruckes, zugeordnet ist. Die Hauptluftleitung wird in Strömungsrichtung von einem Medium durchströmt.

Bei einer bekannten raumluft- und/oder klimatechnischen Anlage ist in jeder Teilluftleitung zwischen der Abzweigung dieser Teilluftleitung und dem der Abzweigung entlang der Strömung am nächsten angeordneten Volumenstromregler jeweils ein Kanaldruckregler vorgesehen. Der Kanaldruckregler dient dazu, in der entsprechenden Teilluftleitung den Druck zu regeln. Ein Kanaldruckregler umfasst eine durch einen Antrieb angetriebene Klappe, wobei dem Antrieb eine Regeleinrichtung sowie ein Sensor zum Messen der Geschwindigkeit und/oder zum Messen des statischen Drucks in der Luftleitung zugeordnet sind.

Damit an dem Luftauslass, der entlang der Strömung am weitesten von dem Hauptluftleitungsventilator angeordnet ist, noch eine ausreichend große Menge an Luft zur Verfügung steht, ist in der Hauptluftleitung ein hinreichend hoher Druck an strömendem Medium (Luft) erforderlich. Ein hoher Druck in der Hauptluftleitung hat wiederum zur Folge, dass die Klappe des Kanaldruckreglers der Teilluftleitung, die am nächsten zum Hauptluftleitungsventilator angeordnet ist, bereits stark in ihre Drosselstellung verlagert ist, während hingegen die Klappe des Kanaldruckreglers der Teilluftleitung, der am weitesten entfernt vom Hauptluftleitungsventilator angeordnet ist, sich noch in ihrer Offenstellung befindet. Energietechnisch ist es wünschenswert, möglichst geringe Drücke in einer Luftleitung auszuregeln und damit geringe Drosselstellungen erforderlich zu machen. Insoweit ist es für eine energetisch günstige Betriebsweise wünschenswert, wenn sich die Stellung der Klappe eines Volumenstromreglers möglichst in ihrer Offenstellung befindet und/oder die Drehzahl eines Ventilators in dem jeweiligen Regelbereich des betreffenden Volumenstromreglers bzw. des Ventilators befindet. Mit zunehmender Schließstellung einer Klappe steigt jedoch die Geräuschbildung und auch der Energiebedarf an, da der entsprechende Ventilator gegen die geschlossene Klappe "arbeitet".

Aus der US 2004/0194484 A1 ist ein leicht zu installierendes Multi-Zonen-HVAC-System bekannt.

Aufgabe der Erfindung ist es, die vorgenannten Nachteile zu vermeiden und eine raumluft- und/oder klimatechnische Anlage anzugeben, die eine energetisch günstigere und eine geräuschärmere Betriebsweise ermöglicht.

Diese Aufgabe wird dadurch gelöst, dass in zumindest einer Teilluftleitung zwischen der Abzweigung dieser Teilluftleitung und dem der Abzweigung entlang der Strömung, d. h. in Strömungsrichtung gesehen, am nächsten angeordneten Volumenstromregler ein Teilluftleitungsventilator angeordnet ist, dass sämtliche Volumenstromregler einer Teilluftleitung über eine Teilregeleinheit mit dem Teilluftleitungsventilator dieser Teilluftleitung verbunden sind, wobei die Teilregeleinheit dazu eingerichtet ist, in Abhängigkeit von den von den Volumenstromreglern dieser Teilluftleitung enthaltenen Informationen zu ihrer jeweiligen Klappenstellung den Teilluftleitungsventilator zu regeln und dass die Teilluftleitungsventilatoren aller Teilluftleitungen über eine Hauptregeleinheit mit dem Hauptluftleitungsventilator verbunden sind, wobei die Hauptregeleinheit dazu eingerichtet ist, in Abhängigkeit von den von den Teilluftleitungsventilatoren enthaltenen Informationen zu ihrer jeweiligen Drehzahl und/oder Betriebsinformationen, wie beispielsweise zu ihrer jeweiligen Leistungsaufnahme, den Hauptluftleitungsventilator zu regeln.

Unter einer Abzweigung wird der Bereich verstanden, von dem eine Teilluftleitung von der Hauptluftleitung abzweigt. Zweigen auf gleicher Höhe der Hauptluftleitung zwei Nebenluftleitungen beispielsweise in voneinander weg weisende Richtungen ab, sind insoweit in diesem Bereich der Hauptluftleitung zwei Abzweigungen vorgesehen. Umfasst die Anlage nur eine Hauptluftleitung und zwei Teilluftleitungen, wobei sich die Hauptluftleitung im Bereich einer Abzweigung in die zwei Teilluftleitungen aufteilt, sind die Hauptluftleitung und die Teilluftleitungen hinsichtlich ihres Verlaufs nach Art eines Y ausgerichtet.

Der Hauptluftleitungsventilator dient dazu, eine ausreichende Menge an strömendem Medium in der Hauptluftleitung für alle von dieser Hauptluftleitung abzweigenden Teilluftleitungen bereitzustellen. Jeder Teilluftleitungsventilator dient zum Aufbau und zur Regelung des Druckes in der betreffenden Teilluftleitung. Die Teilluftleitungsventilatoren können daher kleiner als der Hauptluftleitungsventilator dimensioniert werden.

Die Klappenstellung eines Volumenstromreglers beeinflusst die Regelung des zugehörigen Teilluftleitungsventilators bzw. der zugehörigen Teilluftleitungsventilatoren. Der (die) betreffende(n) Teilluftleitungsventilator(en) beeinflusst (beeinflussen) wiederum die Regelung der Drehzahl des Hauptluftleitungsventilators. Bei einer aus dem Stand der Technik bekannten raumluft- und/oder klimatechnischen Anlage wird der Druck in einer Teilluftleitung durch den betreffenden Kanaldruckregler geregelt. Bei der erfindungsgemäßen Ausgestaltung erfolgt die Regelung derart, dass die Leistungsaufnahme so aufgeteilt ist, dass alle Teilluftleitungsventilatoren optimal in ihrem jeweiligen Kennfeld arbeiten. So ist das Kennfeld jedes Teilluftleitungsventilators bekannt. Die erfindungsgemäße Ausgestaltung erlaubt insoweit eine Betriebsweise jedes Teilluftleitungsventilators in seinem optimalen Drehzahlbereich. Da insoweit alle Kennfelder angepasst sind, muss weniger Energie eingebracht werden.

Dabei bestimmt der Volumenstromregler, dessen Klappe sich hinsichtlich seiner Stellung am weitesten außerhalb seines Regelbereiches des betreffenden Volumenstromreglers befindet, die Drehzahl des dieser Teilluftleitung zugeordneten Teilluftleitungsventilators. Der Teilluftleitungsventilator, dessen Drehzahl sich am weitesten außerhalb seines optimalen Bereichs befindet, bestimmt wiederum die Drehzahl des in der Hauptluftleitung angeordneten Hauptluftleitungsventilators.

Sofern der Sensor eines Volumenstromreglers als Differenzdrucksensor ausgebildet ist, wird der Differenzdruck gemessen. Über einen Differenzdrucktransmitter kann der gemessene Differenzdruck (Wirkdruck) in ein elektrisches Signal umgeformt werden. Die Regeleinrichtung gibt dann ein entsprechendes Signal an den Stellantrieb dieses Volumenstromreglers, der mit der Klappe verbunden ist. Der Sollwert kann beispielsweise von einem Raumtemperaturregler vorgegeben werden. Die Regeleinrichtung vergleicht den Istwert mit dem Sollwert und verändert bei Abweichungen das Führungssignal des Stellantriebes.

Dem (den) Volumenstromregler(n) und dem Teilluftleitungsventilator einer jeden Teilluftleitung kann jeweils eine eigene Teilregeleinheit zugeordnet sein.

Alternativ kann den Volumenstromreglern und den Teilluftleitungsventilatoren aller Teilluftleitungen eine gemeinsame Teilregeleinheit zugeordnet sein.

Dabei können die Teilregeleinheit(en) und die Hauptregeleinheit in einer Gesamtregeleinheit integriert sein.

Bei zumindest einer Teilluftleitung kann die betreffende Teilregeleinheit mit jedem Volumenstromregler dieser Teilluftleitung und mit dem Teilluftleitungsventilator dieser Teilluftleitung durch eine drahtgebundene Verbindung verbunden sein.

Alternativ kann bei zumindest einer Teilluftleitung die betreffende Teilregeleinheit mit jedem Volumenstromregler dieser Teilluftleitung und mit dem Teilluftleitungsventilator dieser Teilluftleitung durch eine drahtlose Verbindung, vorzugsweise durch eine Funkverbindung, durch eine Infrarotverbindung oder dergleichen verbunden sein.

Die Hauptregeleinheit kann mit jedem Teilluftleitungsventilator und mit dem Hauptluftleitungsventilator durch eine drahtgebundene Verbindung verbunden sein.

Es ist aber auch möglich, dass die Hauptregeleinheit mit jedem Teilluftleitungsventilator und mit dem Hauptluftleitungsventilator durch eine drahtlose Verbindung, vorzugsweise durch eine Funkverbindung, durch eine Infrarotverbindung oder dergleichen, verbunden ist.

Die Erfindung betrifft auch ein Verfahren zur Regelung einer raumluft- und/oder klimatechnischen Anlage zur Belüftung eines Raumes oder von Räumen mit zumindest einer Hauptluftleitung, wobei von der Hauptluftleitung zumindest eine Teilluftleitung im Bereich einer Abzweigung abzweigt und/oder sich die Hauptluftleitung im Bereich einer Abzweigung in wenigstens zwei Teilluftleitungen aufteilt, wobei die Hauptluftleitung einen Lufteinlass zum Eintritt eines strömenden Mediums aufweist und wobei in der Hauptluftleitung zwischen dem Lufteinlass und der dem Lufteinlass entlang der Strömung am nächsten angeordneten Abzweigung ein Hauptluftleitungsventilator angeordnet ist, wobei jede Teilluftleitung zumindest einen Luftauslass aufweist und wobei jedem in der Teilluftleitung vorgesehenen Luftauslass in Strömungsrichtung gesehen ein regelbarer Volumenstromregler zur Regelung des Volumenstroms des über den betreffenden Luftauslass strömenden Mediums vorgelagert ist, wobei der entsprechende Volumenstromregler jeweils einen Stellantrieb und eine Regeleinrichtung aufweist und ihm ein Sensor, vorzugsweise ein Differenzdrucksensor, zum Messen der Geschwindigkeit und/oder zum Messen des Wirkdruckes, zugeordnet ist, insbesondere zur Regelung einer raumluft- und/oder klimatechnischen Anlage nach einem der Ansprüche 1 bis 8. Die Hauptluftleitung wird in Strömungsrichtung von einem Medium durchströmt.

Bei einer bekannten raumluft- und/oder klimatechnischen Anlage ist in jeder Teilluftleitung zwischen der Abzweigung dieser Teilluftleitung und dem der Abzweigung entlang der Strömung am nächsten angeordneten Volumenstromregler jeweils ein Kanaldruckregler vorgesehen. Der Kanaldruckregler dient dazu, in der entsprechenden Teilluftleitung den Druck zu regeln. Ein Kanaldruckregler umfasst eine durch einen Antrieb angetriebene Klappe, wobei dem Antrieb eine Regeleinrichtung sowie ein Sensor zum Messen der Geschwindigkeit und/oder zum Messen des statischen Drucks in der Luftleitung zugeordnet sind.

Damit an dem Luftauslass, der entlang der Strömung am weitesten von dem Hauptluftleitungsventilator angeordnet ist, noch eine ausreichend große Menge an Luft zur Verfügung steht, ist in der Hauptluftleitung ein hinreichend hoher Druck an strömendem Medium (Luft) erforderlich. Ein hoher Druck in der Hauptluftleitung hat wiederum zur Folge, dass die Klappe des Kanaldruckreglers der Teilluftleitung, die am nächsten zum Hauptluftleitungsventilator angeordnet ist, bereits stark in ihre Drosselstellung verlagert ist, während hingegen die Klappe des Kanaldruckreglers der Teilluftleitung, der am weitesten entfernt vom Hauptluftleitungsventilator angeordnet ist, sich noch in ihrer Offenstellung befindet. Energietechnisch ist es wünschenswert, möglichst geringe Drücke in einer Luftleitung auszuregeln und damit geringe Drosselstellungen erforderlich zu machen. Insoweit ist es für eine energetisch günstige Betriebsweise wünschenswert, wenn sich die Stellung der Klappe eines Volumenstromreglers möglichst in ihrer Offenstellung befindet und/oder die Drehzahl eines Ventilators in dem jeweiligen Regelbereich des betreffenden Volumenstromreglers bzw. des Ventilators befindet. Mit zunehmender Schließstellung einer Klappe steigt jedoch die Geräuschbildung und auch der Energiebedarf an, da der entsprechende Ventilator gegen die geschlossene Klappe "arbeitet".

Aufgabe der Erfindung ist es, die vorgenannten Nachteile zu vermeiden und ein Verfahren für eine Regelung einer raumluft- und/oder klimatechnischen Anlage anzugeben, das eine energetisch günstigere und eine geräuschärmere Betriebsweise ermöglicht.

Diese Aufgabe wird dadurch gelöst, dass in zumindest einer Teilluftleitung zwischen der Abzweigung dieser Teilluftleitung und dem der Abzweigung entlang der Strömung, d. h. in Strömungsrichtung gesehen, am nächsten angeordneten Volumenstromregler ein Teilluftleitungsventilator angeordnet ist, dass sämtliche Volumenstromregler einer Teilluftleitung über eine Teilregeleinheit mit dem Teilluftleitungsventilator dieser Teilluftleitung verbunden sind, wobei jeder Volumenstromregler einer Teilluftleitung ein Signal mit Informationen zu der Klappenstellung seiner Klappe an die dieser Teilluftleitung zugeordnete Teilregeleinheit ausgibt und die Teilregeleinheit in Abhängigkeit von den von den Volumenstromreglern dieser Teilluftleitung enthaltenen Informationen zu ihrer jeweiligen Klappenstellung den Teilluftleitungsventilator regelt und dass die Teilluftleitungsventilatoren aller Teilluftleitungen über eine Hauptregeleinheit mit dem Hauptluftleitungsventilator verbunden sind, wobei jeder Teilluftleitungsventilator ein Signal mit Informationen über seine Drehzahl an die mit dem Hauptluftleitungsventilator verbundene Hauptregeleinheit ausgibt und die Hauptregeleinheit in Abhängigkeit von den von den Teilluftleitungsventilatoren enthaltenen Informationen zu ihrer jeweiligen Drehzahl und/oder Betriebsinformationen, wie beispielsweise zu ihrer jeweiligen Leistungsaufnahme, den Hauptluftleitungsventilator regelt.

Unter einer Abzweigung wird der Bereich verstanden, von dem eine Teilluftleitung von der Hauptluftleitung abzweigt. Zweigen auf gleicher Höhe der Hauptluftleitung zwei Nebenluftleitungen beispielsweise in voneinander weg weisende Richtungen ab, sind insoweit in diesem Bereich der Hauptluftleitung zwei Abzweigungen vorgesehen. Umfasst die Anlage nur eine Hauptluftleitung und zwei Teilluftleitungen, wobei sich die Hauptluftleitung im Bereich einer Abzweigung in die zwei Teilluftleitungen aufteilt, sind die Hauptluftleitung und die Teilluftleitungen hinsichtlich ihres Verlaufs nach Art eines Y ausgerichtet.

Der Hauptluftleitungsventilator dient dazu, eine ausreichende Menge an strömendem Medium in der Hauptluftleitung für alle von dieser Hauptluftleitung abzweigenden Teilluftleitungen bereitzustellen. Jeder Teilluftleitungsventilator dient zum Aufbau und zur Regelung des Druckes in der betreffenden Teilluftleitung. Die Teilluftleitungsventilatoren können daher kleiner als der Hauptluftleitungsventilator dimensioniert werden.

Die Klappenstellung eines Volumenstromreglers beeinflusst die Regelung des zugehörigen Teilluftleitungsventilators bzw. der zugehörigen Teilluftleitungsventilatoren. Der (die) betreffende(n) Teilluftleitungsventilator(en) beeinflusst (beeinflussen) wiederum die Regelung der Drehzahl des Hauptluftleitungsventilators. Bei einer aus dem Stand der Technik bekannten raumluft- und/oder klimatechnischen Anlage wird der Druck in einer Teilluftleitung durch den betreffenden Kanaldruckregler geregelt. Bei der erfindungsgemäßen Ausgestaltung erfolgt die Regelung derart, dass die Leistungsaufnahme so aufgeteilt ist, dass alle Teilluftleitungsventilatoren optimal in ihrem jeweiligen Kennfeld arbeiten. So ist das Kennfeld jedes Teilluftleitungsventilators bekannt. Die erfindungsgemäße Ausgestaltung erlaubt insoweit eine Betriebsweise jedes Teilluftleitungsventilators in seinem optimalen Drehzahlbereich. Da insoweit alle Kennfelder angepasst sind, muss weniger Energie eingebracht werden.

Dabei bestimmt der Volumenstromregler, dessen Klappe sich hinsichtlich seiner Stellung am weitesten außerhalb seines Regelbereiches des betreffenden Volumenstromreglers befindet, die Drehzahl des dieser Teilluftleitung zugeordneten Teilluftleitungsventilators. Der Teilluftleitungsventilator, dessen Drehzahl sich am weitesten außerhalb seines Regelbereichs befindet, bestimmt wiederum die Drehzahl des in der Hauptluftleitung angeordneten Hauptluftleitungsventilators.

Das von einem Volumenstromregler ausgesandte Signal kann nur die Informationen "vollständig offen" oder "vollständig geschlossen" enthalten. Die Information "vollständig offen" kann besagen, dass die Teilluftleitung vollständig abgesperrt ist. Die Information "vollständig offen" kann aber auch bedeuten, dass die Klappe ihre maximale Schließstellung erreicht hat, in der aber noch ein freier Strömungsquerschnitt verbleibt.

Erhält die Teilregeleinheit von einem mit ihr verbundenen Volumenstromregler das Signal "vollständig offen", erhöht die Teilregeleinheit die Drehzahl des betreffenden Teilluftleitungsventilators. Damit wird der Druck in der Teilluftleitung erhöht. Infolgedessen wird die Klappe des Volumenstromreglers, der das Signal "vollständig offen" gesandt hat, wieder mehr in Richtung ihrer Schließstellung und damit in ihren Regelbereich verlagert. In der vollständigen Schließstellung der Klappe beträgt der Winkel zwischen der Längserstreckung der Luftleitung im Bereich des Volumenstromreglers und der Klappe vorzugsweise zwischen 70° bis 80°.

Erhält die Regeleinheit von einem mit ihr verbundenen Volumenstromregler das Signal "vollständig geschlossen", verringert die Teilregeleinheit die Drehzahl des betreffenden Teilluftleitungsventilators. Damit sinkt der Druck in der Teilluftleitung. Infolgedessen wird die Klappe des Volumenstromreglers, der das Signal "vollständig geschlossen" gesandt hat, wieder mehr in Richtung ihrer Offenstellung und damit in ihren Regelbereich verlagert.

Das von einem Volumenstromregler ausgesandte Signal kann die konkrete Gradstellung (Öffnungswinkel), wie z. B. 10°, seiner Klappe und/oder seine verbleibende Strömungsfläche, d. h. die in der betreffenden Klappenstellung verbleibende freie Strömungsfläche, enthalten.

Dabei kann das von einem Teilluftleitungsventilator ausgesandte Signal nur die Informationen "0 %" oder "100 %" seines Betriebszustandes enthalten. Bei der Information 0 % ist der betreffende Teilluftleitungsventilator nicht aktiv und fördert insoweit nicht. Erhält die Hauptregeleinheit die Information 100 %, befindet sich der betreffende Teilluftleitungsventilator im Betriebszustand mit seiner maximalen Förderleistung.

Erhält die Hauptregeleinheit von einem mit ihr verbundenen Teilluftleitungsventilator das Signal "aus", senkt die Hauptregeleinheit die Drehzahl des Hauptluftleitungsventilators. Damit wird die von dem Hauptluftleitungsventilator in der Hauptluftleitung eingeblasene Menge an strömenden Medium in der Hauptluftleitung reduziert. Um den gewünschten Druck in der Teilluftleitung aufrechtzuerhalten, erhöht der Teilluftleitungsventilator, der das Signal "aus" gesandt hat, seine Drehzahl.

Erhält die Hauptregeleinheit von einem mit ihr verbundenen Teilluftleitungsventilator das Signal "100 %", erhöht die Hauptregeleinheit die Drehzahl des Hauptluftleitungsventilators. Damit erhöht der Hauptluftleitungsventilator die in der Hauptluftleitung eingeblasene Menge an strömenden Medium. Infolgedessen kann der Teilluftleitungsventilator, der das Signal "100 %" gesandt hat, seine Drehzahl derart reduzieren, dass er den gewünschten Druck in der Teilluftleitung aufrechterhält.

Es ist aber auch möglich, dass das von einem Teilluftleitungsventilator ausgesandte Signal Informationen über die konkrete Drehzahl und/oder über die Leistungsaufnahme und/oder über seinen prozentualen Leistungsanteil enthält. Bei der konkreten Drehzahl sendet der Teilluftleitungsventilator den konkreten Wert über die Umdrehungen/Minute aus. Sofern das von einem Teilluftleitungsventilator ausgesandte Signal Informationen zu seinem prozentualen Leistungsanteil hat, wird beispielsweise die Angabe 80 % ausgesandt. Da der Hauptregeleinheit die Daten jedes mir ihr verbundenen Teilluftleitungsventilators bekannt sind, kann die Hauptregeleinheit auf die geförderte Menge an strömenden Medium schließen.

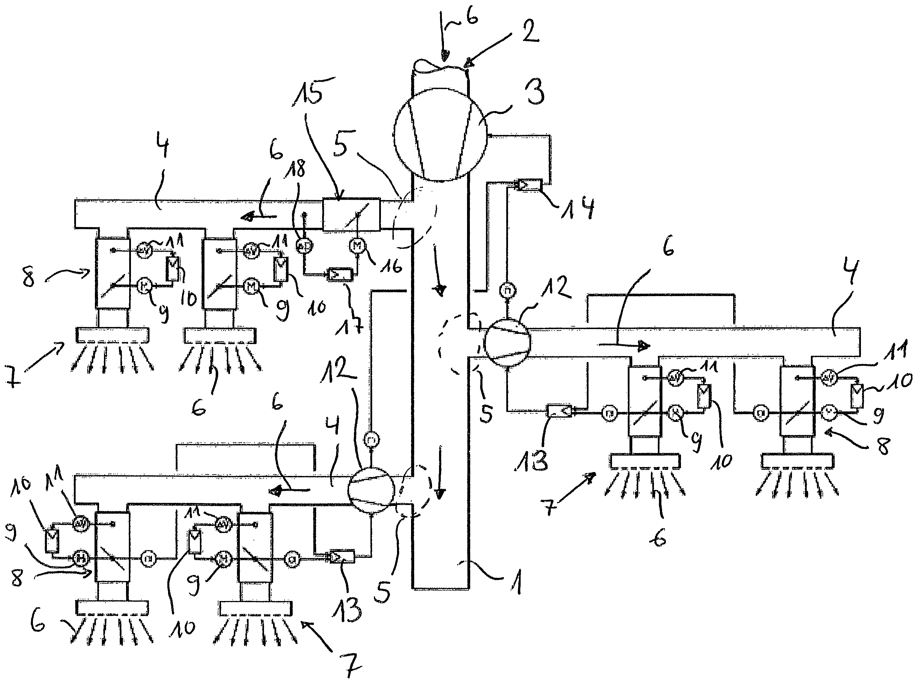

Im Folgenden wird ein in der Zeichnung dargestelltes Ausführungsbeispiel der Erfindung erläutert.

Die in der Figur dargestellte raumluft- und/oder klimatechnische Anlage dient zur Belüftung eines Raumes. Die Anlage weist eine Hauptluftleitung 1 auf, wobei die Hauptluftleitung 1 einen Lufteinlass 2 zum Eintritt eines strömenden Mediums aufweist. Über den Lufteinlass 2 wird Außenluft in die Anlage angesaugt. Hierzu ist in der Hauptluftleitung 1 ein Hauptluftleitungsventilator 3 vorgesehen.

Von der Hauptluftleitung 1 zweigen in dem dargestellten Ausführungsbeispiel drei Teilluftleitungen 4 im Bereich je einer Abzweigung 5 ab. Insoweit weist die Hauptluftleitung 1 drei Abzweigungen 5 auf, wobei von jeder Abzweigung 5 eine Teilluftleitung 4 abzweigt. Der Hauptluftleitungsventilator 3 ist in der Hauptluftleitung 1 zwischen dem Lufteinlass 2 und der dem Lufteinlass 2 entlang der Strömung (Pfeile 6) am nächsten angeordneten Abzweigung 5 angeordnet.

Jeder der drei Teilluftleitungen 4 weist zwei Luftauslässe 7 auf, über die die zugeführte Luft in einen nicht dargestellten Raum eingebracht werden kann. Jedem Luftauslass 7 ist ein regelbarer Volumenstromregler 8 zur Regelung des Volumenstroms des über den betreffenden Luftauslass 7 strömenden Mediums vorgelagert. Jeder Volumenstromregler 8 weist jeweils einen Stellantrieb 9 und eine Regeleinrichtung 10 auf. Ferner ist jedem Volumenstromregler 8 ein als Differenzdrucksensor ausgebildeter Sensor 11 zum Messen des Wirkdruckes zugeordnet.

Bei den beiden Teilluftleitungen 4, die entlang der Strömung (Pfeile 6) weiter vom Lufteinlass 2 entfernt angeordnet sind, ist zwischen der Abzweigung 5 der betreffenden Teilluftleitung 4 aus der Hauptluftleitung 1 und dem der Abzweigung 5 entlang der Strömung (Pfeil 6) am nächsten angeordneten Volumenstromregler 8 ein Teilluftleitungsventilator 12 angeordnet. Die beiden Volumenstromregler 8 jeder Teilluftleitung 4 sind über eine Teilregeleinheit 13 mit dem Teilluftleitungsventilator 12 dieser Teilluftleitung 4 verbunden.

Insoweit ist den beiden Volumenstromreglern 8 und dem Teilluftleitungsventilator 12 eines jeden der beiden Teilluftleitungen 4 jeweils eine eigene Teilregeleinheit 13 zugeordnet. In dem dargestellten Ausführungsbeispiel ist bei jeder der beiden Teilluftleitungen 4 die betreffende Teilregeleinheit 13 mit jedem Volumenstromregler 8 dieser Teilluftleitung 4 und mit dem Teilluftleitungsventilator 12 dieser Teilluftleitung 4 durch eine drahtgebundene Verbindung verbunden.

Die beiden Teilluftleitungsventilatoren 12 der beiden Teilluftleitungen 4 sind über eine Hauptregeleinheit 14 mit dem Hauptluftleitungsventilator 3 verbunden. Die Hauptregeleinheit 14 ist mit jedem der beiden Teilluftleitungsventilatoren 12 und mit dem Hauptluftleitungsventilator 3 ebenfalls durch eine drahtgebundene Verbindung verbunden.

Wie der Figur zu entnehmen ist, gibt jeder der beiden Volumenstromregler 8 jeder Teilluftleitung 4 ein Signal mit Informationen zu der Klappenstellung seiner Klappe an die dieser Teilluftleitung 4 zugeordnete Teilregeleinheit 13 aus. Das ausgesandte Signal kann beispielsweise nur die Informationen "vollständig offen" oder "vollständig geschlossen" enthalten. Das ausgesandte Signal kann auch die konkrete Gradstellung seiner Klappe, z. B. 50° und/oder seine verbleibende Strömungsfläche enthalten. Jede Teilregeleinheit 13 regelt in Abhängigkeit von den von den beiden Volumenstromreglern 8 dieser Teilluftleitung 4 enthaltenen Informationen zu ihrer jeweiligen Klappenstellung den zugeordneten Teilluftleitungsventilator 12.

Jeder Teilluftleitungsventilator 12 gibt ein Signal mit Informationen über seine Drehzahl an die mit dem Hauptluftleitungsventilator 3 verbundene Hauptregeleinheit 14 aus. Die Hauptregeleinheit 14 regelt in Abhängigkeit von den von den Teilluftleitungsventilatoren 12 enthaltenen Informationen zu ihrer jeweiligen Drehzahl den Hauptluftleitungsventilator 3. Das von einem Teilluftleitungsventilator 12 ausgesandte Signal kann nur die Informationen "0 %" oder "100 %" seines Betriebszustandes enthalten. Das ausgesandte Signal kann auch Informationen über die konkrete Drehzahl und/oder über seinen prozentualen Leistungsanteil des jeweiligen Teilluftleitungsventilators 12 enthalten.

Die dritte Teilluftleitung 4, der entlang der Strömung (Pfeile 6) am nächsten zum Lufteinlass 2 angeordnet ist, weist keinen Teilluftleitungsventilator 12 auf. Vielmehr ist in dieser Teilluftleitung 4 zwischen der Abzweigung 5 dieser Teilluftleitung 4 und dem der Abzweigung 5 entlang der Strömung (Pfeil 6) am nächsten angeordneten Volumenstromregler 8 ein bekannter Kanaldruckregler 15 vorgesehen, der einen Stellantrieb 16, eine Regeleinrichtung 17 sowie einen Differenzdrucksensor 18 zum Messen des statischen Kanaldruckes aufweist. Insoweit weist die Anlage im Bereich dieser Teilluftleitung 4 nicht die erfindungsgemäße, sondern eine bekannte Ausgestaltung auf.

## Patentansprüche

1. Raumluft- und/oder klimatechnische Anlage zur Belüftung eines Raumes oder von Räumen mit zumindest einer Hauptluftleitung (1), wobei von der Hauptluftleitung (1) zumindest eine Teilluftleitung (4) im Bereich einer Abzweigung (5) abzweigt und/oder sich die Hauptluftleitung (1) im Bereich einer Abzweigung (5) in wenigstens zwei Teilluftleitungen (4) aufteilt, wobei die Hauptluftleitung (1) einen Lufteinlass (2) zum Eintritt eines strömenden Mediums aufweist und wobei in der Hauptluftleitung (1) zwischen dem Lufteinlass (2) und der dem Lufteinlass (2) entlang der Strömung (6) am nächsten angeordneten Abzweigung (5) ein Hauptluftleitungsventilator (3) angeordnet ist, wobei jede Teilluftleitung (4) zumindest einen Luftauslass (7) aufweist und wobei jedem in der Teilluftleitung (4) vorgesehenen Luftauslass (7) ein regelbarer Volumenstromregler (8) zur Regelung des Volumenstroms des über den betreffenden Luftauslass (7) strömenden Mediums vorgelagert ist, wobei der entsprechende Volumenstromregler (8) jeweils einen Stellantrieb (9) und eine Regeleinrichtung (10) aufweist und ihm ein Sensor (11), vorzugsweise ein Differenzdrucksensor, zum Messen der Geschwindigkeit und/oder zum Messen des Wirkdruckes, zugeordnet ist, **dadurch gekennzeichnet, dass** in zumindest einer Teilluftleitung (4) zwischen der Abzweigung dieser Teilluftleitung (4) und dem der Abzweigung (5) entlang der Strömung am nächsten angeordneten Volumenstromregler (8) ein Teilluftleitungsventilator (12) angeordnet ist, dass sämtliche Volumenstromregler (8) einer Teilluftleitung (4) über eine Teilregeleinheit (13) mit dem Teilluftleitungsventilator (12) dieser Teilluftleitung (4) verbunden sind, wobei die Teilregeleinheit (13) dazu eingerichtet ist, in Abhängigkeit von den von den Volumenstromreglern (8) dieser Teilluftleitung (4) enthaltenen Informationen zu ihrer jeweiligen Klappenstellung den Teilluftleitungsventilator (12) zu regeln und dass die Teilluftleitungsventilatoren (12) aller Teilluftleitungen (4) über eine Hauptregeleinheit (14) mit dem Hauptluftleitungsventilator (3) verbunden sind, wobei die Hauptregeleinheit (14) dazu eingerichtet ist, in Abhängigkeit von den von den Teilluftleitungsventilatoren (12) enthaltenen Informationen zu ihrer jeweiligen Drehzahl und/oder zu ihrer jeweiligen Leistungsaufnahme den Hauptluftleitungsventilator (3) zu regeln.

2. Raumluft- und/oder klimatechnische Anlage nach dem vorhergehenden Anspruch, **dadurch gekennzeichnet, dass** dem (den) Volumenstromregler(n) (8) und dem Teilluftleitungsventilator (12) einer jeden Teilluftleitung (4) jeweils eine eigene Teilregeleinheit (13) zugeordnet ist.

3. Raumluft- und/oder klimatechnische Anlage nach Anspruch 1, **dadurch gekennzeichnet, dass** den Volumenstromreglern (8) und den Teilluftleitungsventilatoren (12) aller Teilluftleitungen (4) eine gemeinsame Teilregeleinheit (13) zugeordnet ist.

4. Raumluft- und/oder klimatechnische Anlage nach einem der vorhergehenden Ansprüche, **dadurch gekennzeichnet, dass** die Teilregeleinheit(en) (13) und die Hauptregeleinheit (14) in einer Gesamtregeleinheit integriert sind.

5. Raumluft- und/oder klimatechnische Anlage nach einem der vorhergehenden Ansprüche, **dadurch gekennzeichnet, dass** bei zumindest einer Teilluftleitung (4) die betreffende Teilregeleinheit (13) mit jedem Volumenstromregler (8) dieser Teilluftleitung (4) und mit dem Teilluftleitungsventilator (12) dieser Teilluftleitung (4) durch eine drahtgebundene Verbindung verbunden ist.

6. Raumluft- und/oder klimatechnische Anlage nach einem der vorhergehenden Ansprüche, **dadurch gekennzeichnet, dass** bei zumindest einer Teilluftleitung (4) die betreffende Teilregeleinheit (13) mit jedem Volumenstromregler (8) dieser Teilluftleitung (4) und mit dem Teilluftleitungsventilator (12) dieser Teilluftleitung (4) durch eine drahtlose Verbindung, vorzugsweise durch eine Funkverbindung, durch eine Infrarotverbindung oder dergleichen verbunden ist.

7. Raumluft- und/oder klimatechnischen Anlage nach einem der vorhergehenden Ansprüche, **dadurch gekennzeichnet, dass** die Hauptregeleinheit (14) mit jedem Teilluftleitungsventilator (12) und mit dem Hauptluftleitungsventilator (3) durch eine drahtgebundene Verbindung verbunden ist.

8. Raumluft- und/oder klimatechnischen Anlage nach einem der vorhergehenden Ansprüche, **dadurch gekennzeichnet, dass** die Hauptregeleinheit (14) mit jedem Teilluftleitungsventilator (12) und mit dem Hauptluftleitungsventilator (13) durch eine drahtlose Verbindung, vorzugsweise durch eine Funkverbindung, durch eine Infrarotverbindung oder dergleichen, verbunden ist.

9. Verfahren zur Regelung einer raumluft- und/oder klimatechnischen Anlage zur Belüftung eines Raumes oder von Räumen mit zumindest einer Hauptluftleitung (1), wobei von der Hauptluftleitung (1) zumindest eine Teilluftleitung (4) im Bereich einer Abzweigung (5) abzweigt und/oder sich die Hauptluftleitung (1) im Bereich einer Abzweigung (5) in wenigstens zwei Teilluftleitungen (4) aufteilt, wobei die Hauptluftleitung (1) einen Lufteinlass (2) zum Eintritt eines strömenden Mediums aufweist und wobei in der Hauptluftleitung (1) zwischen dem Lufteinlass (2) und der dem Lufteinlass (2) entlang der Strömung (6) am nächsten angeordneten Abzweigung (5) ein Hauptluftleitungsventilator (3) angeordnet ist, wobei jede Teilluftleitung (4) zumindest einen Luftauslass (7) aufweist und wobei jeder in dem Teilluftleitung (4) vorgesehenen Luftauslass (7) ein regelbarer Volumenstromregler (8) zur Regelung des Volumenstroms des über den betreffenden Luftauslass (7) strömenden Mediums vorgelagert ist, wobei der entsprechende Volumenstromregler (8) jeweils einen Stellantrieb (9) und eine Regeleinrichtung (10) aufweist und ihm ein Sensor (11), vorzugsweise ein Differenzdrucksensor, zum Messen der Geschwindigkeit und/oder zum Messen des Wirkdruckes, zugeordnet ist, **dadurch gekennzeichnet, dass** in zumindest eine Teilluftleitung (4) zwischen der Abzweigung (5) dieser Teilluftleitung (4) und dem der Abzweigung (5) entlang der Strömung (6) am nächsten angeordneten Volumenstromregler (8) ein Teilluftleitungsventilator (12) angeordnet ist, dass sämtliche Volumenstromregler (8) einer Teilluftleitung (4) über eine Teilregeleinheit (13) mit dem Teilluftleitungsventilator (12) dieser Teilluftleitung (4) verbunden sind, wobei jeder Volumenstromregler (8) einer Teilluftleitung (4) ein Signal mit Informationen zu der Klappenstellung seiner Klappe an die dieser Teilluftleitung (4) zugeordnete Teilregeleinheit (13) ausgibt und die Teilregeleinheit (13) in Abhängigkeit von den von den Volumenstromreglern (8) dieser Teilluftleitung (4) enthaltenen Informationen zu ihrer jeweiligen Klappenstellung den Teilluftleitungsventilator (12) regelt und dass die Teilluftleitungsventilatoren (12) aller Teilluftleitungen (4) über eine Hauptregeleinheit (14) mit dem Hauptluftleitungsventilator (3) verbunden sind, wobei jeder Teilluftleitungsventilator (12) ein Signal mit Informationen über seine Drehzahl an die mit dem Hauptluftleitungsventilator (3) verbundene Hauptregeleinheit (14) ausgibt und die Hauptregeleinheit (14) in Abhängigkeit von den von den Teilluftleitungsventilatoren (12) enthaltenen Informationen zu ihrer jeweiligen Drehzahl und/oder zu ihrer jeweiligen Leistungsaufnahme den Hauptluftleitungsventilator (3) regelt.

10. Verfahren nach dem vorhergehenden Anspruch, **dadurch gekennzeichnet, dass** das von einem Volumenstromregler (8) ausgesandte Signal nur die Informationen "vollständig offen" oder "vollständig geschlossen" enthält.

11. Verfahren nach Anspruch 9, **dadurch gekennzeichnet, dass** das von einem Volumenstromregler (8) ausgesandte Signal die konkrete Gradstellung seiner Klappe und/oder seine verbleibende Strömungsfläche enthält.

12. Verfahren nach einem der Ansprüche 9 bis 11, **dadurch gekennzeichnet, dass** das von einem Teilluftleitungsventilator (12) ausgesandte Signal nur die Informationen "0 %" oder "100 %" seines Betriebszustandes enthält.

13. Verfahren nach einem der Ansprüche 9 bis 11, **dadurch gekennzeichnet, dass** das von einem Teilluftleitungsventilator (12) ausgesandte Signal Informationen über die konkrete Drehzahl und/oder über die Leistungsaufnahme und/oder über seinen prozentualen Leistungsanteil enthält.

## Claims

1. Room air and/or air conditioning system for ventilating a room or rooms with at least one main air line (1), wherein at least one partial air line (4) branches off from the main air line (1) in the region of a branching point (5), and/or the main air line (1) divides into at least two partial air lines (4) in the region of a branching point (5), wherein the main air line (1) comprises an air inlet (2) for admitting a flowing medium, and wherein, arranged in the main air line (1) between the air inlet (2) and the branching point (5) arranged closest to the air inlet (2) along the direction of flow (6), is a main air line ventilator (3), wherein each partial air line (4) comprises at least one air outlet (7), and wherein a regulatable volume flow regulator (8) is arranged upstream of each air outlet (7) provided in the partial air line (4), in order to regulate the volume flow of the medium flowing via the air outlet (7) concerned, wherein the corresponding volume flow regulator (8) comprises in each case an actuator (9) and a regulating device (10), and a sensor (11), preferably a differential pressure sensor, is allocated to the flow regulator, for measuring the speed and/or for measuring the effective pressure, **characterised in that** a partial air line ventilator (12) is assigned to at least one partial air line (4), between the branching point of this partial air line (4) and the volume flow regulator (8) arranged most closely to the branching point (5) along the direction of flow, that all the volume flow regulators (8) of a partial air line (4) are connected via a partial regulating unit (13) to the partial air line ventilator (12) of this partial air line (4), wherein the partial regulating unit (13) is configured such that it regulates the partial air line ventilator (12) as a dependency of the information obtained from the volume flow regulators (8) of this partial air line (4) regarding their respective flap setting, and that the partial air line ventilators (12) of all the partial air lines (4) are connected via a main regulating unit (14) to the main air line ventilator (3), wherein the main regulating unit (14) is configured, as a dependency of the information received from the partial air line ventilators (12), to regulate the main air line ventilator (3) to its respective speed of rotation and/or to its respective power consumption.

2. Room air and/or air conditioning system according to the preceding claim, **characterised in that** in each case an individual partial regulating unit (13) is allocated to the volume flow regulator(s) (8) and to the partial air line ventilator (12) of each partial air line (4).

3. Room air and/or air conditioning system according to claim 1, **characterised in that** a common partial regulating unit (13) is assigned to the volume flow regulators (8) and to the partial air line ventilators (12) of all the partial air lines (4).

4. Room air and/or air conditioning system according to any one of the preceding claims, **characterised in that** the partial regulating unit(s) (13) and the main regulating unit (14) are integrated into one overall regulating unit.

5. Room air and/or air conditioning system according to any one of the preceding claims, **characterised in that,** with at least one partial air line (4), the partial regulating unit (13) concerned is connected to every volume flow regulator (8) of this partial air line (4) and to the partial air line ventilator (12) of this partial air line (4) by a wire-bound connection.

6. Room air and/or air conditioning system according to any one of the preceding claims, **characterised in that,** with at least one partial air line (4), the partial regulating unit (13) concerned is connected to every volume flow regulator (8) of this partial air line (4) and to the partial air line ventilator (12) of this partial air line (4) by a wireless connection, preferably by a radio connection, by an infrared connection, or the like.

7. Room air and/or air conditioning system according to any one of the preceding claims, **characterised in that** the main regulating unit (14) is connected to each partial air line ventilator (12) and to the main air line ventilator (3) by a wire-bound connection.

8. Room air and/or air conditioning system according to any one of the preceding claims, **characterised in that** the main regulating unit (14) is connected to each partial air line ventilator (12) and to the main air line ventilator (13) by a wireless connection, preferably by a radio connection, by an infrared connection, or the like.

9. Method for regulating a room air and/or air conditioning system for ventilating a room or rooms with at least one main air line (1), wherein at least one partial air line (4) branches off from the main air line (1) in the region of a branching point (5), and/or the main air line (1) divides into at least two partial air lines (4) in the region of a branching point (5), wherein the main air line (1) comprises an air inlet (2) for admitting a flowing medium, and wherein, arranged in the main air line (1) between the air inlet (2) and the branching point (5) arranged closest to the air inlet (2) along the direction of flow (6), is a main air line ventilator (3), wherein each partial air line (4) comprises at least one air outlet (7), and wherein a regulatable volume flow regulator (8) is arranged upstream of each air outlet (7) provided in the partial air line (4), in order to regulate the volume flow of the medium flowing via the air outlet (7) concerned, wherein the corresponding volume flow regulator (8) comprises in each case an actuator (9) and a regulating device (10), and a sensor (11), preferably a differential pressure sensor, is allocated to the flow regulator, for measuring the speed and/or for measuring the effective pressure, **characterised in that** a partial air line ventilator (12) is assigned to at least one partial air line (4), between the branching point (5) of this partial air line (4) and the volume flow regulator (8) arranged most closely to the branching point (5) along the direction of flow (6), that all the volume flow regulators (8) of a partial air line (4) are connected via a partial regulating unit (13) to the partial air line ventilator (12) of this partial air line (4), wherein each volume flow regulator (8) of a partial air line (4) emits a signal, with information regarding the flap setting of its flap, to the partial regulating unit (13) assigned to this partial air line (4), and the partial regulating unit (13) then regulates the partial air line ventilator (12) as a dependency of the information received from the volume flow regulators (8) of this partial air line (4) with regard to its respective flap setting, and that the partial air line ventilators (12) of all the partial air lines (4) are connected via a main regulating unit (14) to the main air line ventilator (3), wherein each partial air line ventilator (12) emits a signal with information regarding its revolution speed to the main regulating unit (14) connected to the main air line ventilator (3), and the main regulating unit (14) then regulates the main air line ventilator (3) as a dependency of the information received from the partial air line ventilators (12) regarding their respective rotation speeds and/or their respective power consumptions.

10. Method according to the preceding claim, **characterised in that** the signal emitted by a volume flow regulator (8) contains only the information "completely open" or "completely closed".

11. Method according to claim 9, **characterised in that** the signal emitted by a volume flow regulator (8) contains the specific degree setting of its flap and/or its remaining flow surface.

12. Method according to any one of claims 9 to 11, **characterised in that** the signal emitted by a partial air line ventilator (12) contains only the information "0 %" or "100 %" of its operational state.

13. Method according to any one of claims 9 to 11, **characterised in that** the signal emitted by a partial air line ventilator (12) contains information regarding the specific speed of rotation and/or regarding the power consumption and/or regarding its power component percentage.

## Revendications

1. Installation technique d'air ambiant et/ou de climatisation destinée à l'aération d'une pièce ou de pièces dotée d'au moins une conduite d'air principale (1), au moins une conduite d'air partielle (4) étant ramifiée à partir de la conduite d'air principale (1) dans la zone d'une ramification (5) et/ou la conduite d'air principale (1) étant divisée en au moins deux conduites d'air partielles (4) dans la zone d'une ramification (5), la conduite d'air principale (1) présentant une entrée d'air (2) pour l'entrée d'un fluide en écoulement, et dans la conduite d'air principale (1), un ventilateur de conduite d'air principale (3) est agencé entre l'entrée d'air (2) et la ramification (5) agencée la plus proche de l'entrée d'air (2) le long de l'écoulement (6), chaque conduite d'air partielle (4) présentant au moins une sortie d'air (7) et chaque sortie d'air (7) prévue dans la conduite d'air partielle (4) étant précédée d'un régulateur de débit volumétrique (8) régulable pour réguler le débit volumétrique du fluide s'écoulant par l'intermédiaire de la sortie d'air (7) en question, le régulateur de débit volumétrique (8) correspondant présentant respectivement un actionneur (9) et un dispositif de régulation (10), et un capteur (11), de préférence un capteur de pression différentielle, lui étant associé pour mesurer la vitesse et/ou pour mesurer la pression active, **caractérisée en ce que** dans au moins une conduite d'air partielle (4) entre la ramification de cette conduite d'air partielle (4) et le régulateur de débit volumétrique (8) agencé le plus proche de la ramification (5) le long de l'écoulement est agencé un ventilateur de conduite d'air partielle (12), **en ce que** tous les régulateurs de débit volumétrique (8) d'une conduite d'air partielle (4) sont reliés par une unité de régulation partielle (13) au ventilateur de conduite d'air partielle (12) de cette conduite d'air partielle (4), l'unité de régulation partielle (13) étant conçue pour réguler le ventilateur de conduite d'air partielle (12) en fonction des informations contenues par les régulateurs de débit volumétrique (8) de cette conduite d'air partielle (4) pour leur position de clapet respective, et **en ce que** les ventilateurs de conduite d'air partielle (12) de toutes les conduites d'air partielles (4) sont reliés par une unité de régulation principale (14) au ventilateur de conduite d'air principale (3), l'unité de régulation principale (14) étant conçue pour réguler le ventilateur de conduite d'air principale (3) en fonction des informations contenues dans les ventilateurs de conduite d'air partielle (12) pour leur vitesse de rotation respective et/ou leur consommation de puissance respective.

2. Installation technique d'air ambiant et/ou de climatisation selon la revendication précédente, **caractérisée en ce qu'**une unité de régulation partielle (13) distincte est associée au (x) régulateur (s) de débit volumétrique (8) et au ventilateur de conduite d'air partielle (12) de chaque conduite d'air partielle (4).

3. Installation technique d'air ambiant et/ou de climatisation selon la revendication 1, **caractérisée en ce qu'**une unité de régulation partielle commune (13) est associée aux régulateurs de débit volumétrique (8) et aux ventilateurs de conduite d'air partielle (12) de toutes les conduites d'air partielles (4).

4. Installation technique d'air ambiant et/ou de climatisation selon l'une quelconque des revendications précédentes, **caractérisé en ce que** la ou les unités de régulation partielles (13) et l'unité de régulation principale (14) sont intégrées dans une unité de régulation globale.

5. Installation technique d'air ambiant et/ou de climatisation selon l'une quelconque des revendications précédentes, **caractérisée en ce que,** pour au moins une conduite d'air partielle (4), l'unité de régulation partielle (13) concernée est reliée à chaque régulateur de débit volumétrique (8) de cette conduite d'air partielle (4) et au ventilateur de conduite d'air partielle (12) de cette conduite d'air partielle (4) par une liaison câblée.

6. Installation technique d'air ambiant et/ou de climatisation selon l'une quelconque des revendications précédentes, **caractérisée en ce que,** pour au moins une conduite d'air partielle (4), l'unité de régulation partielle (13) concernée est reliée à chaque régulateur de débit volumétrique (8) de cette conduite d'air partielle (4) et au ventilateur de conduite d'air partielle (12) de cette conduite d'air partielle (4) par une liaison sans fil, de préférence par une liaison radio, par une liaison infrarouge ou analogue.

7. Installation technique d'air ambiant et/ou de climatisation selon l'une quelconque des revendications précédentes, **caractérisée en ce que** l'unité de régulation principale (14) est reliée à chaque ventilateur de conduite d'air partielle (12) et au ventilateur de conduite d'air principale (3) par une liaison câblée.

8. Installation technique d'air ambiant et/ou de climatisation selon l'une quelconque des revendications précédentes, **caractérisée en ce que** l'unité de régulation principale (14) est reliée à chaque ventilateur de conduite d'air partielle (12) et au ventilateur de conduite d'air principale (13) par une liaison sans fil, de préférence par une liaison radio, par une liaison infrarouge ou analogue.

9. Procédé de régulation d'une installation technique d'air ambiant et/ou de climatisation destinée à l'aération d'une pièce ou de pièces dotée d'au moins une conduite d'air principale (1), au moins une conduite d'air partielle (4) étant ramifiée à partir de la conduite d'air principale (1) dans la zone d'une ramification (5) et/ou la conduite d'air principale (1) étant divisée en au moins deux conduites d'air partielles (4) dans la zone d'une ramification (5), la conduite d'air principale (1) présentant une entrée d'air (2) pour l'entrée d'un fluide en écoulement, et dans la conduite d'air principale (1), un ventilateur de conduite d'air principale (3) est agencé entre l'entrée d'air (2) et la ramification (5) agencée la plus proche de l'entrée d'air (2) le long de l'écoulement (6), chaque conduite d'air partielle (4) présentant au moins une sortie d'air (7) et chaque sortie d'air (7) prévue dans la conduite d'air partielle (4) étant précédée d'un régulateur de débit volumétrique (8) régulable pour réguler le débit volumétrique du fluide s'écoulant via la sortie d'air (7) correspondante, le régulateur de débit volumétrique (8) correspondant présentant respectivement un actionneur (9) et un dispositif de régulation (10), et un capteur (11), de préférence un capteur de pression différentielle, lui étant associé pour mesurer la vitesse et/ou pour mesurer la pression active, **caractérisé en ce que** dans au moins une conduite d'air partielle (4), entre la ramification (5) de cette conduite d'air partielle (4) et le régulateur de débit volumétrique (8) agencé le plus proche de la ramification (5) le long de l'écoulement (6) est agencé un ventilateur de conduite d'air partielle (12), **en ce que** tous les régulateurs de débit volumétrique (8) d'une conduite d'air partielle (4) sont reliés par une unité de régulation partielle (13) au ventilateur de conduite d'air partielle (12) de cette conduite d'air partielle (4), chaque régulateur de débit volumétrique (8) d'une conduite d'air partielle (4) émettant un signal avec des informations sur la position de clapet de son clapet à l'unité de régulation partielle (13) associée à cette conduite d'air partielle (4), et l'unité de régulation partielle (13) étant reliée au ventilateur de conduite principale (3) en fonction des informations contenues par les régulateurs de débit volumétrique (8) de cette conduite d'air partielle (4) pour leur position de clapet respective, et **en ce que** les ventilateurs de conduite d'air partielle (12) de toutes les conduites d'air partielles (4) sont reliés par une unité de régulation principale (14) au ventilateur de conduite d'air principale (3), chaque ventilateur de conduite d'air partielle (12) émettant un signal avec des informations sur sa vitesse de rotation au niveau de l'unité de régulation principale (14) reliée au ventilateur de conduite d'air principale (3), et l'unité de régulation principale (14) régule le ventilateur de conduite d'air principale (3) en fonction des informations contenues dans les ventilateurs de conduite d'air partielle (12) pour leur vitesse de rotation respective et/ou leur consommation de puissance respective.

10. Procédé selon la revendication précédente, **caractérisé en ce que** le signal émis par un régulateur de débit volumétrique(8) ne contient que les informations « ouverture complète » ou « fermeture complète ».

11. Procédé selon la revendication 9, **caractérisé en ce que** le signal émis par un régulateur de débit volumétrique (8) contient la position concrète de son clapet et/ou sa surface d'écoulement restante.

12. Procédé selon l'une quelconque des revendications 9 à 11, **caractérisé en ce que** le signal émis par un ventilateur de conduite d'air partielle (12) ne contient que les informations « 0 % » ou « 100 % de son état de fonctionnement.

13. Procédé selon l'une quelconque des revendications 9 à 11, **caractérisé en ce que** le signal émis par un ventilateur de conduite d'air partielle (12) contient des informations sur la vitesse de rotation concrète et/ou sur la consommation de puissance et/ou sur sa part de puissance en pourcentage.
